# NEUE EUROPÄISCHE PATENTSCHRIFT

(11) **EP 0 678 958 B2**
(45) Veröffentlichungstag und Bekanntmachung des Hinweises auf die Entscheidung über den Einspruch: **26.01.2005**
(45) Hinweis auf die Patenterteilung: 07.01.1999
(21) Anmeldenummer: 95104380.1
(22) Anmeldetag: 24.03.1995
(51) Int. Cl.: H02G 11/00, F16G 13/16

(54) **Ablegewanne**
Supporting duct
Gouttière de support

(30) Priorität: 25.03.1994 DE 4410336
(43) Veröffentlichungstag der Anmeldung: 25.10.1995
(73) Patentinhaber: MURRPLASTIK GmbH, SYSTEM-TECHNIK, D-71570 Oppenweiler (DE)
(72) Erfinder: Funk, Rainer, D-71543 Wüstenrot (DE); Ehmann, Bruno, D-73563 Mögglingen (DE)
(74) Vertreter: Fleck, Hermann-Josef, Dr.-Ing.

(56) Entgegenhaltungen:
- DE-A- 3 300 495
- DE-C- 2 626 101
- DE-C- 4 140 910
- Fördertechnik - Standard - Sonder -; IGUS - Design Information
- Montageanleitung fuer "interluebke" Schrankwaende von Mai 1991 und September 1991
- Auszug aus dem Katalog der Fa. Maschinenbau Kitz GmbH (Stand 16.12.1992) mk Seitenfuehrung System SF 5.1, 5.2, 6.1, 6.2 und eine Werkstattzeichnung Nr. 22.01 vom 17.11.1998 "Gleitleiste"
- Produktinformationsblatt Nr. 0.4.105.67 von 09/93 item GmbH " Gleitleiste Nr.8"
- Auszug aus dem Katalog der Fa. Robert Bosch GmbH "Mechanik-Grundelemente" von 1993
- Auszug aus dem Gesamtkatalog der item GmbH "Mb System-baukasten" (Ausg. 1992). Fertigungszeichnung (11.01.1991) und perspektivische Darstellung (8.10.1992) einer Winkelleiste Nr. 0.0.411.14 der item GmbH und Preisliste "Neuheiten '93", die die Winkelleiste Nr. 0.0.411.14 umfasst
- Preisliste 93/D der Maschinenbau Kitz GmbH von 03/93, "mk Profil System 2000"
- Auszug aus dem Gesamtkatalog der item GmbH "MB System-baukasten" (Ausg. 1992)

## Beschreibung

Die Erfindung betrifft eine Ablegewanne für Energieführungsketten nach dem Oberbegriff des Anspruchs 1.

Es ist bekannt, daß beim Überschreiten der freitragenden Länge von Energieführungsketten sich der Kettenobertrumm auf Untertrumm ablegt und aufeinander gleiten. Die herkömmlichen Energieführungsketten sind daher mit Gleitkurven versehen, so daß beim Überschreiten der freitragenden Länge die Funktion nicht beeinträchtigt wird. Die Führung in einer Ablegewanne ist jedoch unerläßlich. Die Ablage hinter dem Festpunkt der Energieführungskette erfolgt bei einseitiger Kettenanordnung durch Gleitschienen aus Kunststoff oder einem U-Blech. Die Höhe der Gleitschiene ist genau auf die Gliederhöhe abzustimmen. An der Innenseite der Ablegewanne dürfen keine vorstehenden Teile, wie Grat, Schrauben, Nieten usw., angeordnet sein, die den Ablauf der Kette beeinträchtigen. Besitzt die Energieführungskette unterschiedliche Höhe, dann ist es erforderlich, die Gleitschienen diesem Umstand möglichst schnell und mit minimalem Aufwand anzupassen. Bei herkömmlichen Ketten ist es schon deswegen nicht ohne weiteres möglich, weil die Gleitschienen entweder angeformt oder mit der Innenwand verschraubt (vgl. z. B. Auszug aus dem Katalog 1192 IGUS "Inovation with Plastics", Page 12 und 13, der Firma igus Spritzgußteile für die Industrie GmbH) sind, so daß die Anpassung entweder nicht möglich oder mit erheblichem Zeitaufwand verbunden ist. Ferner ist in der DE-A-41 40 910 eine Führungsrinne beschrieben, die aus zwei Trägerprofilen und zwei Seitenwänden besteht, wobei die Seitenwände in keilförmigen Rinnen der Trägerprofile eingesetzt und in diesen festgekrallt werden. Zur Ablage des Obertrums der Energieführungskette sind des weiteren separate Auflageprofile vorgesehen, die im Wesentlichen als U-Profile mit unterschiedlich langen freien Schenkeln ausgebildet sind. An dem kürzeren Schenkel des Auflageprofils ist ein Wulst angeformt, der in eine Hohlkehle des Trägerprofils einrückbar ist, so daß das Auflageprofil in einer Art Schnappverbindung an dem Trägerprofil befestigbar ist. Der mittlere, horizontal angeordnete Schenkel des Auflageprofils dient dabei der Ablage des Obertrumms. Eine derartige Konstruktion ist vergleichsweise aufwendig und das Auflageprofil bei einer Änderung der Position der Führungsrinne nur umständlich handhabbar. Ferner ist in der DE-PS 26 26 101 ein Kabelführungskanal zur Aufnahme ortsfester elektrischer Leitungen zur Verlegung an Gebäudewandungen offenbart. Der Kabelführungskanal besteht aus einem U-förmigen Grundprofil mit einer Basisplatte, in der L-förmige Nuten ausgebildet sind. An die Basisplatte sind parallel zueinander verlaufende Seitenwände angeformt. Der Kabelführungskanal ist mittels einer Klammer abdeckbar, in der ebenfalls L-förmige Nuten ausgebildet sind, so daß der in seinem Betriebszustand umfangseitig geschlossene und die Eigenschaften eines geschlossenen Hohlprofils aufweisende Kanal mittels in seiner Richtung sich erstreckende Trennwände unterteilbar ist. Die Trennwände verlaufen parallel zu den Seitenwänden und erstrecken sich über die ganze Höhe des Kanals, so daß deren Breite von der Höhe der Seitenwände abhängig ist. Werden Kabelführungskanäle mit unterschiedlich hohen Seiten hergestellt, müssen auch entsprechend breite Trennwände, die sich von der Basisplatte bis zur Klammer hin erstrecken, hergestellt werden, dadurch wird der Herstellungsaufwand vergrößert. Da die Nuten nicht in den Seitenwänden, sondern ausschließlich in der Basisplatte und in der Klammer ausgebildet sind, ist dieser Kabelführungskanal für Energieführungsketten der eingangs genannten Art weder vorgesehen noch geeignet. In dem 1992 veröffentlichten Katalog der Maschinenbau Kitz GmbH, Fördertechnik Standard, Sonder Seitenführung System SF 3.1, 3.2, 4.1, 4.2, 5.1, 5.2, 6.1, 6.2,sind Seitenführungen bzw. Seitenführungssysteme und Gleitleisten offenbart, wie sie in der Anlagentechnik desöfteren eingesetzt werden. In dieser Druckschrift sind verschiedene Seitenführungen mit Gleitleisten, Seitenführungen aus Klemmstücken und Verbindungselemente ohne Führungsleisten offenbart, die miteinander durch Steckund Schraubverbindungen lösbar verbindbar sind, wobei eine Höhenverstellung der Führungsleisten dadurch erfolgt, daß die Verbindungselemente verstellt werden. Bei diesen Seitenführungen handelt es sich jedoch nicht um Ablegewannen für Energieführungsketten, bei denen sich der Obertrumm der Energieführungskette auf den Führungsleisten ordnungsgemäß abstützen könnte, sondern vielmehr und ausschließlich um Führungseinrichtungen, bei denen die geführten Einrichtungen, z.B. Werkstückträger, sich auf dem mit Kunststoffleisten versehenen Boden der Führungseinrichtung abstützen. Seitlich werden die Einrichtungen dadurch geführt, indem sie mit den mit den Kunststoffleisten ebenfalls bestückten Seitenwänden in Kontakt bringbar sind. Zum Tragen sind diese Leisten jedoch weder vorgesehen noch geeignet. Die Kunststofführungsleisten, die mit den regelmäßig aus Aluminium bestehenden Profilen lösbar verbindbar sind, sind als Aluminiumprofil-Schutz vorgesehen. Um diese Führungsleisten einstellen bzw. verstellen zu können, müssen mehrere Halter, Klemmstücke und Verbindungselemente vorgesehen und eingestellt werden. Von Bedeutung ist auch die Tatsache, daß die im Katalog offenbarten Gleitleisten nicht dazu vorgesehen und insbesondere geeignet sind, den Obertrumm einer Energieführungskette zu tragen, zumal ihre lichte Dicke nur wenige Millimeter beträgt.

Ausgehend von dem obigen Stand der Technik liegt der Erfindung die Aufgabe zugrunde, hier Abhilfe zu schaffen und die gattungsgemäße Ablegewanne so weiterzubilden, daß die Gleitschienen mit minimalem Arbeits- und Zeitaufwand mit dem Schenkel betrieblich verbindbar sind.

Die gestellte Aufgabe wird erfüllungsgemäß durch die Merkmale des Anspruches 1 gelöst.

Weitere zweckmäßige und vorteilhafte Ausgestaltung in der Erfindung gehen aus den Unteransprüchen hervor.

Ein Ausführungsbeispiel der Erfindung ist in der Zeichnung schematisch dargestellt und wird im folgenden näher erläutert. Es zeigen
- Fig. 1: eine Ablagewanne in Seitenansicht,
- Fig. 2: ein Schnitt entlang der Linie a - a nach Figur 1.
- Fig. 3: einen Schnittt entlang der Linie B-B nach Fig. 1,
- Fig. 4: einen Schenkel der Ablegewanne,
- Fig. 5: einen weiteren Schenkel der Ablegewanne und

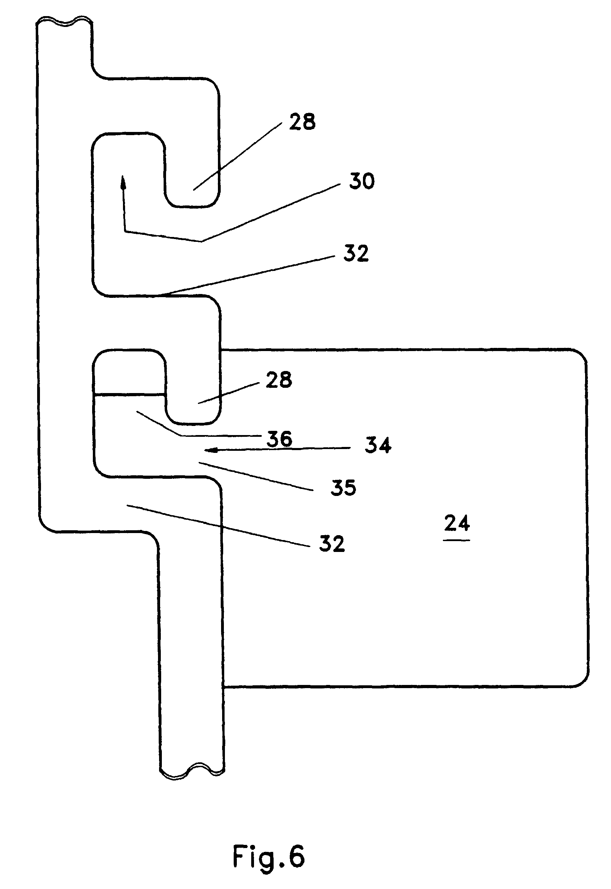

- Fig. 6: den mit VI bezeichneten Teil nach Fig. 4 vergrößert dargestellt.

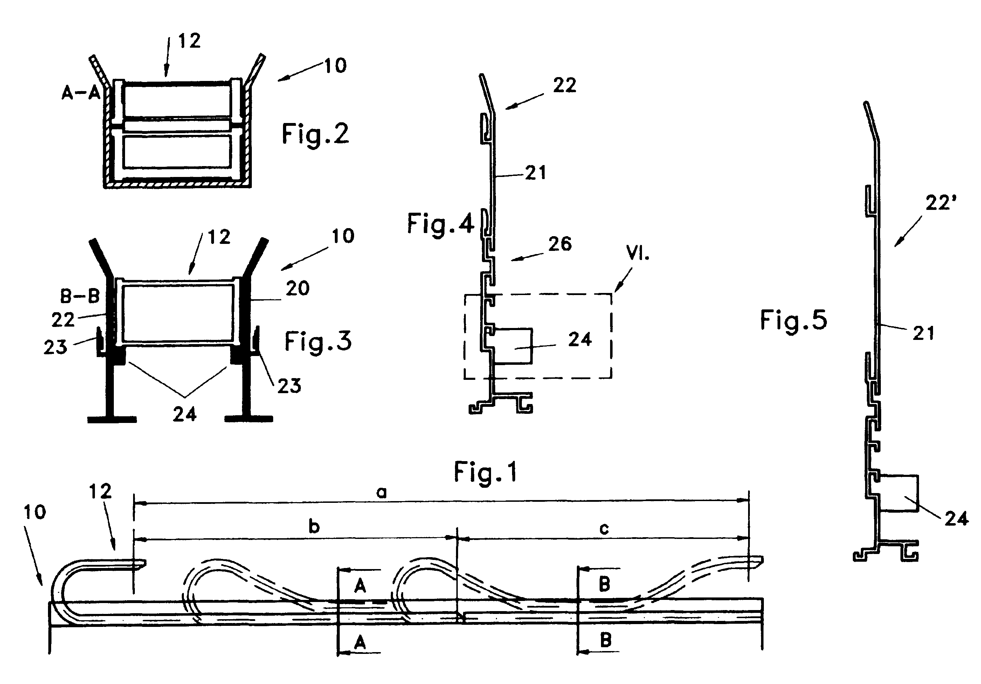

In Fig. 1 ist eine Ablegewanne 10 mit einer Energieführungskette 12 dargestellt. Mit a ist der gesamte Verfahrweg der Energieführungskette bezeichnet, während mit b und c jeweils der halbe Hub angedeutet ist. Die Ablegewanne 10 besteht aus den Schenkeln 20 und 22 mit außenseitig angeordneten und sich vertikal erstreckenden Schenkeln 23, die jeweils eine Nut definieren. Innenseitig sind Gleitschienen 24 vorgesehen, die mit der Innenseite 21 der Schenkel 22 bzw. 22' lösbar verbindbar sind. Die Innenseite 21 der Schenkel 22, 22' besitzt mehrere Ausnehmungen 30, in die Vorsprünge 34 der Gleitschiene 24 einsteckbar bzw. einhängbar sind. Die Vorsprünge 34 bestehen aus einem horizontalen Schenkel 35 und einem vertikal sich erstreckenden Schenkel 36, der in die Ausnehmung 30 hineinragt und eine vertikal verlaufende Nase 28 hintergreift. Der horizontale Abschnitt 35 stützt sich auf der Auflagefläche 32 ab, so daß der Vorsprung 34 mit der Ausnehmung 30 sowohl kraft- als auch formschlüssig verbindbar ist. Die Gleitschiene 24 ist ein Profilstück, dessen Vorsprung 34 in die Ausnehmung 30 eingeschoben werden kann. Die Gleitschiene besteht regelmäßig aus Kunststoff, was auch für die Schenkel 22 und 22' gilt.

Ganz allgemein geht es bei der Erfindung darum, die Gleitschiene 24 mit der Ausnehmung 30 mit minimalem technischen Aufwand sicher und schnell verbinden zu können. Die Verbindungsmittel, das heißt die Ausnehmung 30 und der Vorsprung 35, werden hier schon während der Herstellung des Schenkels 22 bzw. der Gleitschiene 24 hergestellt.

Durch die Druckverbindung zwischen der den Vorsprung 34 tragenden Stirnseite und der Innenseite 21 ist eine ordnungsgemäße Verbindung zwischen der Gleitschiene 24 und dem jeweiligen Schenkel 22 herstellbar.

## Patentansprüche

1. Ablegewanne (10) für Energieführungsketten (12) mit hin- und herverfahrbarem Kettenobertrumm, die sich in Längsrichtung der Energieführungskette (12) erstreckt, einen etwa U-förmigen Querschnitt aufweist und an den vertikal sich erstreckenden Innenseiten (21) der Ablegewanne-Schenkel (20,22) mit lösbar befestigbaren Gleitschienen (24) zur Auflage des Ketten-Obertrumms versehen ist,
**dadurch gekennzeichnet,**
**daß** die Schenkel (20,22) an ihren Innenseiten (21) in Längsrichtung der Abiegewanne (10) sich erstreckende Ausnehmungen (30) aufweisen daß jeder der beiden Schenkel (20, 22) zum Anpassen der Höhe der Gleitschienen (24) für Energieführungsketten (12) unterschiedlicher Höhe Ausnehmungen (30) auf unterschiedlichen Höhen des Schenkels (20, 22) aufweist und daß die Ausnehmungen (30) mit angeformten Vorsprüngen (34) der Gleitschienen (24) verbindbar sind.

2. Ablegewanne nach Anspruch 1,
**dadurch gekennzeichnet,**
**daß** die Ausnehmungen (30) Hinterschnitte aufweisen, in die die hakenförmigen Vorsprünge (34) eingreifen.

3. Ablegewanne nach Anspruch 1 oder 2,
**dadurch gekennzeichnet,**
**daß** die Vorsprünge (34) einen waagerechten Abschnitt (35) und einen vertikal sich erstreckenden Abschnitt (36) aufweisen.

4. Ablegewanne nach einem der Ansprüche 1 bis 3,
**dadurch gekennzeichnet,**
**daß** die Vorsprünge (34) in Form von Federn ausgebildet sind, die sich in Längsrichtung der Ablegewanne erstrecken.

5. Ablegewanne nach einem der Ansprüche 1 bis 4,
**dadurch gekennzeichnet,**
**daß** die Ausnehmungen (30) sich in Längsrichtung der Ablegewanne erstrecken und daß im Verbindungsbereich die Ausnehmungen (30) komplementär zu den Vorsprüngen (34) ausgebildet sind.

6. Ablegewanne nach einem der Ansprüche 1 bis 5,
**dadurch gekennzeichnet,**
**daß** die Vorsprünge (34) in die Ausnehmungen (30) einsteckbar bzw. einhängbar sind.

## Claims

1. Trough (10) for energy guide chains (12) which have a chain upper end which may be moved backward and forward, said trough extending in the longitudinal direction of the energy guide chain (12) and having a roughly U-shaped cross-section and being provided on the vertically extending inner sides (21) of the trough legs (20, 22) with slide rails (24), which may be secured in a detachable manner, for supporting the upper end of the chain,
**characterised in that**
the legs (20, 22) have on their inner sides (21) recesses (30) which extend in the longitudinal direction of the trough (10), **in that** each of the two legs (20, 22) has recesses (30) at different heights on the leg (20, 22) to match the height of the guide rails (24) for energy guide chains (12) of different heights, and **in that** the recesses (30) may be connected to integrally moulded projections (34) on the guide rails (24).

2. Storage trough according to claim 1, **characterised in that** the recesses (30) have undercuts, in which the hook-like projection members (34) engage.

3. Storage trough according to claim 1 or 2, **characterised in that** the projection members (34) have a horizontal portion (35) and a vertically extending portion (36).

4. Storage trough according to one of claims 1 to 3, **characterised in that** the projection members (34) are configured in the form of springs, which extend in the longitudinal direction of the storage trough.

5. Storage trough according to one of claims 1 to 4, **characterised in that** the recesses (30) extend in the longitudinal direction of the storage trough, and **in that** the recesses (30) in the connection region are configured to correspond to the projection members (34).

6. Storage trough according to one of claims 1 to 5, **characterised in that** the projection members (34) are insertable or suspendable in the recesses (30).

## Revendications

1. Goulotte de support (10) pour chaînes de guidage d'énergie (12) avec un brin supérieur de chaîne mobile en va-et-vient, laquelle s'étend dans le sens longitudinal de la chaîne de guidage d'énergie (12), comporte une section pratiquement en forme de U et, au niveau des faces intérieures (21), orientées verticalement, des côtés latéraux (20, 22) de la goulotte de support, est munie de glissières (24), propres à être fixées de manière amovible et servant de support au brin supérieur de la chaîne, **caractérisée en ce que** les côtés latéraux (20, 22), sur leurs faces intérieures (21), comportent des évidements (30) qui s'étendent dans le sens longitudinal de la goulotte de support (10), **en ce que** chacun des deux côtés latéraux (20, 22) comporte, à des hauteurs différentes du côté latéral (20, 22), des évidements (30) de hauteur différente pour ajuster la hauteur des glissières (24) pour les chaînes de guidage d'énergie (12) et **en ce que** les évidements (30) peuvent être reliés à des saillies (34) formées contre les glissières (24).

2. Goulotte de support selon la revendication 1, **caractérisée en ce que** les évidements (30) comportent des contre-dépouilles, dans lesquelles entrent en prise les saillies (34) en forme de crochet.

3. Goulotte de support selon la revendication 1 ou 2, **caractérisée en ce que** les saillies (34) comportent une partie horizontale (35) et une partie (36) qui s'étend verticalement.

4. Goulotte de support selon l'une quelconque des revendications 1 à 3, **caractérisée en ce que** les saillies (34) sont conçues sous forme de ressort, qui s'étendent dans le sens longitudinal de la goulotte de support.

5. Goulotte de support selon l'une quelconque des revendications 1 à 4, **caractérisée en ce que** les évidements (30) s'étendent dans le sens longitudinal de la goulotte de support et **en ce que** les évidements (30) sont réalisés dans la zone de liaison avec une forme complémentaire à celle des saillies (34).

6. Goulotte de support selon l'une quelconque des revendications 1 à 5, **caractérisée en ce que** les saillies (34) peuvent être enfichées ou accrochées dans les évidements (30).
